Europäisches Patentamt

European Patent Office

Office européen des brevets

(19)

(11) Veröffentlichungsnummer: **0 276 867 B1**

# EUROPÄISCHE PATENTSCHRIFT

(45) Veröffentlichungstag der Patentschrift: **03.07.91**

(51) Int. Cl.⁵: **F42B 10/60, B64C 13/34**

(21) Anmeldenummer: **88101279.3**

(22) Anmeldetag: **29.01.88**

(54) Ruderstelleinrichtung.

(30) Priorität: **30.01.87 DE 3702733**

(43) Veröffentlichungstag der Anmeldung:
**03.08.88 Patentblatt 88/31**

(45) Bekanntmachung des Hinweises auf die
Patenterteilung:
**03.07.91 Patentblatt 91/27**

(84) Benannte Vertragsstaaten:
**DE FR GB IT NL**

(56) Entgegenhaltungen:
| | |
|---|---|
| DE-A- 3 442 899 | FR-A- 857 515 |
| FR-A- 1 424 606 | FR-A- 2 573 160 |
| US-A- 3 305 194 | US-A- 4 052 024 |

(73) Patentinhaber: **DIEHL GMBH & CO.**
**Stephanstrasse 49**
**W-8500 Nürnberg(DE)**

(72) Erfinder: **Oswald, Peter**
**Hackenrichtstrasse 3**
**W-8503 Altdorf(DE)**
Erfinder: **Der andere Erfinder hat auf seine**
**Nennung verzichtet**

## Beschreibung

Die Erfindung betrifft eine Ruderstelleinrichtung für Lenkmunition mit einer von einem Antriebsmotor angetriebenen Spindel, auf der eine Mutter sitzt, die an ihrem zylindrischen Außenumfang einen Ansatz aufweist, an dem eine Ruderwelle angreift.

Eine derartige Ruderstelleinrichtung ist in der DE-C-34 42 899 beschrieben Bei dieser Ruderstelleinrichtung ist die Mutter ohne äußere Führung, so daß vom Ruder über die Ruderwelle wirkende Kräfte direkt auf das Gewinde zwischen Mutter und Spindel übertragen werden und von der Spindel aufgenommen werden müssen. Der Wirkungsgrad der Einrichtung ist dadurch begrenzt.

Aufgabe der Erfindung ist es, eine Ruderstelleinrichtung der eingangs genannten Art vorzuschlagen, die mit einem verbessertem Wirkungsgrad arbeitet.

Erfindungsgemäß ist obige Aufgabe bei einer Ruderstelleinrichtung der eingangs genannten Art dadurch gelöst, daß die Mutter in einer Hülse geführt ist, wobei die Passung zwischen der Mutter und der Spindel und die Gleitpassung zwischen der Mutter und der Hülse so gewählt sind, daß von der Ruderwelle übertragene Belastungskräfte von der Hülse aufgenommen werden, und daß der Ansatz in einen axialen Schlitz der Hülse greift.

Die Passung zwischen der Mutter und der Spindel ist dabei so gewählt, daß die Mutter an sich auf der Spindel kippen kann. Zwischen dem Außenumfang der Mutter und der Hülse besteht eine Gleitpassung. Die vom Ruder über die Ruderwelle auf die Mutter übertragenen Kräfte werden dabei von der Hülse aufgenommen, ohne daß es zu einem Klemmen der Mutter auf der Spindel kommt. Dementsprechend gering sind die Verluste auf dem Getriebezug zwischen dem Motor und der Ruderwelle. Es ergibt sich also ein vergleichsweise hoher Wirkungsgrad.

Mit der Ruderstelleinrichtung lassen sich ohne Hebelübersetzungen große Kräfte einerseits für die Ruderbewegung übertragen und andererseits bei Belastung des Ruders aufnehmen.

Die Ruderstelleinrichtung ist kompakt aufgebaut. Die Ruderwelle liegt nahe an der Spindel bzw. dem Antriebsmotor. Damit ergeben sich kleine bewegte Massen, die zu einem günstigen dynamischen Verhalten führen. Außerdem ist eine hohe Beschleunigungsfestigkeit erreicht. Das Spiel im Getriebezug ist gering.

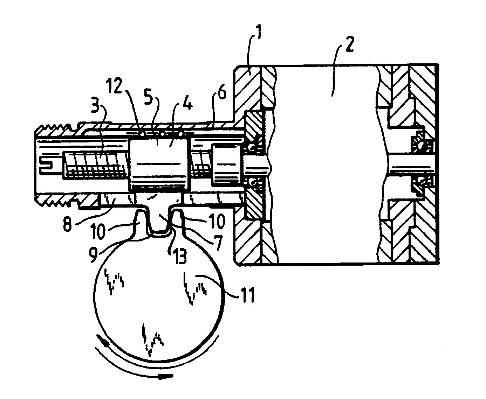

Vorteilhafte Ausgestaltungen der Erfindung ergeben sich aus der folgenden Beschreibung eines Ausführungsbeispiels. Die Figur zeigt eine Ruderstelleinrichtung schematisch.

Ein Träger(1) ist starr in einem nicht näher dargestellten Gehäuse angeordnet. An dem Träger(1) ist ein Antriebsmotor(2) befestigt und gelagert. Mit dem Antriebsmotor(2) ist eine Gewindespindel(3) gekuppelt. Auf der Gewindespindel(3) sitzt eine Mutter(4) mit einem zylindrischen Außenumfang(5).

An dem Träger(1) ist eine Hülse(6) ausgebildet. In dieser ist die Mutter(4) verschieblich, wobei zwischen deren zylindrischen Außenmantel(5) und der Hülse(6) eine Gleitpassung besteht. Die Passung zwischen der Gewindespindel(3) und der Mutter(4) ist so gewählt, daß die Mutter(4) auf der Gewindespindel(3) - ohne die Hülse(6) - kippen könnte. Zwischen der Mutter(4) und der Hülse(6) ist eine Linear-Wälzlagerführung(12) vorgesehen. Stattdessen könnte die Hülse(6) und/oder die Mutter(4) mit einem leicht gleitfähigen Material beschichtet sein oder aus einem solchen Material bestehen.

An der Mutter(4) ist ein Ansatz(7) ausgebildet. Dieser greift durch einen axialen Schlitz(8) der Hülse(6). Dadurch ist ein Mitdrehen der Mutter(4) bei einer Drehung der Gewindespindel(3) verhindert.

Der Ansatz(7) weist eine teilkreisförmige Angriffsfläche(9) auf, die von einem Fingerpaar(10) einer Ruderwelle(11) übergriffen ist. Dadurch ist eine platzsparende und weitgehend spielfreie und leicht montierbare Ankopplung der Ruderwelle(11) an die Mutter(4) geschaffen. Außerdem steht die Ruderwelle(11) nahe beim Antriebsmotor(2) und die zu bewegenden Massen sind klein. Um die Abwälzverhältnisse zwischen dem Ansatz (7) und dem Fingerpaar(10) zu verbessern, weisen der Ansatz(7) und das Fingerpaar(10) eine Zahnflankenform(13) auf.

Die im Flug vom nicht näher dargestellten Ruder über die Ruderwelle(11) auf die Mutter(4) übertragenen Kräfte werden von der Hülse(6) aufgenommen. Damit bleibt die Reibung zwischen den Gewindeflanken der Mutter(4) und der Gewindespindel(3) klein. Der Antriebsmotor(2) hat dementsprechend zur Verstellung des Ruders nur vergleichsweise kleine Reibungskräfte zu überwinden. Der Wirkungsgrad der Kraftübertragung zwischen dem Motor und dem Ruder ist dementsprechend hoch.

## Ansprüche

1. Ruderstelleinrichtung für Lenkmunition mit einer von einem Antriebsmotor (2) angetriebenen Spindel (3), auf der eine Mutter (4) sitzt, die an ihrem zylindrischen Außenumfang (5) einen Ansatz (7) aufweist, an dem eine Ruderwelle (11) angreift, dadurch gekennzeichnet,

   daß die Mutter(4) in einer Hülse(6) geführt ist, wobei die Passung zwischen der Mutter(4) und der Spindel(3) und die Gleitpassung zwischen der Mutter(4) und der Hülse(6) so gewählt sind, daß von der Ruderwelle(11) übertragene Belastungskräfte von der Hülse(6) aufgenommen werden, und daß der Ansatz(7) in einen axialen Schlitz(8) der Hülse(6) greift.

2. Ruderstelleinrichtung nach Anspruch 1, dadurch gekennzeichnet, daß die Hülse(6) mit einem Träger(1) des Antriebsmotors(2) starr verbunden ist.

3. Ruderstelleinrichtung nach Anspruch 1 oder 2, dadurch gekennzeichnet, daß die Ruderwelle(11) mit einem Fingerpaar(10) den Ansatz(7) übergreift.

4. Ruderstelleinrichtung nach Anspruch 3, dadurch gekennzeichnet, daß der Ansatz(7) eine teilkreisförmige Angriffsfläche(9) für das Fingerpaar(10) aufweist.

5. Ruderstelleinrichtung nach einem der vorhergehenden Ansprüche, dadurch gekennzeichnet, daß der Ansatz(7) und das Fingerpaar(10) eine Zahnflankenform(13) aufweisen.

6. Ruderstelleinrichtung nach einem der vorhergehenden Ansprüche, dadurch gekennzeichnet, daß die Hülse(6) und/oder die Mutter(4) mit einem gleitfähigen Material beschichtet sind oder aus einem solchen bestehen.

7. Ruderstelleinrichtung nach einem der vorhergehenden Ansprüchen 1 - 5, dadurch gekennzeichnet, daß zwischen der Hülse(6) und der Mutter(4) eine Linear-Wälzlagerführung(12) angeordnet ist.

## Claims

1. A control-surface adjusting device for guided munition with a spindle (3) which is driven by a driving motor (2) and on which there is seated a nut (4) which has, on its cylindrical outer circumference (5), an extension piece (7) on which a control-surface shaft (11) acts, characterised in that the nut (4) is guided in a sleeve (6), in which respect the fit between the nut (4) and the spindle (3) and the sliding fit between the nut (4) and the sleeve (6) are so selected that loading forces transmitted by the control-surface shaft (11) are absorbed by the sleeve (6), and in that the extension piece (7) engages into an axial slot (8) of the sleeve (6).

2. A control-surface adjusting device according to claim 1, characterised in that the sleeve (6) is connected rigidly to a support (1) of the driving motor (2).

3. A control-surface adjusting device according to claim 1 or 2, characterised in that the control-surface shaft (11) engages over the extension piece (7) with a pair of fingers (10).

4. A control-surface adjusting device according to claim 3, characterised in that the extension piece (7) has a partially circular shaped attack surface (9) for the pair of fingers (10).

5. A control-surface adjusting device according to one of the preceding claims, characterised in that the extension piece (7) and the pair of fingers (10) have a tooth-flank shape (13).

6. A control-surface adjusting device according to one of the preceding claims, characterised in that the sleeve (6) and/or the nut (4) are coated with or consist of a material which is able to slide freely.

7. A control-surface adjusting device according to one of the preceding claims 1 to 5, characterised in that a linear roller-bearing guide (12) is arranged between the sleeve (6) and the nut (4).

## Revendications

1. Dispositif de réglage des gouvernes pour une munition guidée, avec une broche (3), entraînée par un moteur d'entraînement (2), sur laquelle repose une noix (4) qui présente sur sa périphérie extérieure cylindrique (5) un appendice (7) sur lequel vient en contact un arbre de gouverne (11), caractérisé en ce que la noix (4) est guidée dans un manchon (6), l'ajustement entre la noix (4) et la broche (3) et l'ajustement glissant entre la noix (4) et le manchon (6) étant choisis tels que les forces de sollicitation transmises par l'arbre de gouverne (11) sont supportées par le manchon (6) et que l'appendice (7) s'engage dans une fente axiale (8) du manchon (6).

2. Dispositif de réglage des gouvernes selon la revendication 1, caractérisé en ce que le manchon (6) est relié fermement à un support (1) du moteur d'entraînement (2).

3. Dispositif de réglage des gouvernes selon la revendication 1 ou 2, caractérisé en ce que l'arbre de gouverne (11) saisit l'appendice (7) en l'entourant à l'aide de deux doigts (10).

4.  Dispositif de réglage des gouvernes selon la revendication 3, caractérisé en ce que l'appendice (7) présente une surface de contact (9) en forme de segment de cercle, pour les deux doigts (10).

5.  Dispositif de réglage des gouvernes selon l'une quelconque des revendications précédentes, caractérisé en ce que l'appendice (7) et les deux doigts (10) présentent une forme de flanc de denture (13).

6.  Dispositif de réglage des gouvernes selon l'une quelconque des revendications précédentes, caractérisé en ce que le manchon (6) et/ou la noix (4) sont recouverts d'un matériau glissant ou sont composés d'un tel matériau.

7.  Dispositif de réglage des gouvernes selon l'une quelconque de revendications précédentes, caractérisé en ce qu'un guidage linéaire à palier à roulement (12) est disposé entre le manchon (6) et la noix (4).